(19) Europäisches Patentamt
European Patent Office
Office européen des brevets

(11) Publication number: 0 185 329 B1

(12) # EUROPEAN PATENT SPECIFICATION

(45) Date of publication of patent specification: 28.12.88

(51) Int. Cl.[4]: C 10 G 45/64, B 01 J 29/04

(21) Application number: 85115923.6

(22) Date of filing: 13.12.85

(54) **Dewaxing catalysts and processes employing silicoaluminophosphate molecular sieves.**

(30) Priority: 18.12.84 US 683246

(43) Date of publication of application: 25.06.86 Bulletin 86/26

(45) Publication of the grant of the patent: 28.12.88 Bulletin 88/52

(84) Designated Contracting States: AT BE CH DE FR GB IT LI LU NL SE

(56) References cited:
EP-A-0 027 380
EP-A-0 111 748
EP-A-0 124 119
US-A-4 440 871

(73) Proprietor: UNION CARBIDE CORPORATION
39 Old Ridgebury Road
Danbury Connecticut 06817 (US)

(72) Inventor: Gortsema, Frank Peter
7 Briarwood Lane
Pleasantville, NY 10570 (US)
Inventor: Pellet, Regis Joseph
31 Wolf Road
Croton-on-Hudson, NY 10520 (US)
Inventor: Springer, Albert Raymond
155 Kingsbridge Road
Mount Vernon, NY 10550 (US)
Inventor: Rabo, Jule Anthony
19 Windmill Road
Armonk, NY 10504 (US)
Inventor: Long, Gary Norman
Birch Hill Road
Putnam Valley, NY 10579 (US)

(74) Representative: Eggert, Hans-Gunther, Dr.
Räderscheidtstrasse 1
D-5000 Köln 41 (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 185 329 B1

Courier Press, Leamington Spa, England.

**Description**

The present invention relates to dewaxing and hydrodewaxing catalysts comprising silicoaluminophosphate molecular sieves, as hereinafter described, and to processes employing such catalysts.

Dewaxing and hydrodewaxing processes are employed in the refining industry to treat petroleum fractions having initial boiling points over about 176.7°C to improve their pour point. The improvement in pour point is generally effected by selective removal of paraffinic hydrocarbons. Since the pour point of liquid hydrocarbon fuels, e.g., diesel fuels and other light gas oil fractions, are strictly controlled, the pour point specification of such fuels must be met if such are to be employed in their intended use.

The need to reduce the pour point of petroleum fractions has resulted in the development of numerous dewaxing and hydrodewaxing processes wherein the pour points of petroleum fractions are reduced by selective removal of paraffinic hydrocarbons. Processes relating to dewaxing and hydrodewaxing are well known in both the patent and scientific literature. Such processes have employed crystalline aluminosilicates as catalysts. For example, see US—A—3,140,249, US—A—3,140,252, US—A—3,140,251, US—A—3,140,253, US—A—3,956,102 and US—A—4,440,991.

These and other patents disclose the use of various crystalline aluminosilicates as catalysts for dewaxing processes.

Although a large number of zeolite materials have been disclosed as employable as catalysts for dewaxing and hydrodewaxing catalysts, the use of other crystalline molecular sieves has not received attention. This lack of attention is attributable to the scarcity of molecular sieves other than crystalline aluminosilicates. One disclosure of a catalyst containing a crystalline silicate, as opposed to a crystalline aluminosilicate, is disclosed in US—A—4,441,991.

The instant invention provides for catalytic dewaxing and hydrodewaxing of hydrocarbon feedstocks by contacting such with catalysts comprising silicoaluminophosphate molecular sieves, as hereinafter described.

Fig. 1 is a plot of the pour point (°C) as a function of conversion of Catalyst A (SAPO-11) and comparative Catalyst C (SAPO-34).

Fig. 2 is a plot of the pour point (°C) as a function conversion of Catalyst B (SAPO-31) and comparative Catalyst C (SAPO-34).

The present invention relates to catalytic dewaxing and hydrodewaxing (hereinafter jointly referred to as "dewaxing") processes and the catalysts employed in such processes. The catalysts comprise: 1) at least one silicoaluminophosphate molecular sieve, as hereinafter described; and 2) optionally, and in the instance of hydrodewaxing at least one hydrogenation component. The catalyst of this invention may optionally contain particles of a traditional dewaxing catalyst having catalytic activity for dewaxing and/or hydrodewaxing hydrocarbon feedstocks at effective dewaxing conditions, e.g., particles of a traditional dewaxing catalyst containing a zeolitic aluminosilicate(s) of the type generally employed in such dewaxing catalysts. The silicoaluminophosphate molecular sieves employed in the instant invention, i.e., catalysts and processes, are disclosed in US—A—4,440,871 and as characterized in their calcined form by an adsorption of isobutane of at least 2 percent by weight at a partial pressure of 665 mbar and a temperature of 20°C. The traditional dewaxing catalyst component, e.g., a zeolitic aluminosilicate, if any, is characterized as being a dewaxing catalyst component, such as heretofore traditionally employed in dewaxing processes, e.g., the various forms of zeolite Y, silica-alumina, and hydrogenation components. The silicoaluminophosphate molecular sieves employed in this invention are unique in that such are not zeolitic aluminosilicates, as heretofore employed in the prior art, but are specific silicoaluminophosphate molecular sieves, as hereinafter described.

Dewaxing and hydrodewaxing processes involve converting high boiling and high pour point paraffinic waxes and hydrocarbons to lower boiling and lower pour point products. Further, hydrodewaxing involves hydrogenating unsaturates in the product. The term "dewaxing" is employed herein to generally mean the removal of hydrocarbons which readily solidify from petroleum stocks as waxes and includes catalytic dewaxing and hydrodewaxing.

The catalysts of the instant invention have been observed to convert normal paraffins in the hydrocarbon products and, accordingly, reduce the pour point of such products, i.e., act as dewaxing catalysts. This reduction in the pour point by selective normal paraffin conversion is of commercial significance since distillate products have rigid specifications on the acceptable pour point.

The silicoaluminophosphate molecular sieves employed in the instant invention are selected from the hereinafter described group of silicoaluminophosphate molecular sieves as being characterized in their calcined form by an adsorption of isobutane of at least 2 percent by weight at a partial pressure of 665 mbar and a temperature of 20°C. The silicoaluminophosphate molecular sieves are preferably also characterized in their calcined form by an adsorption of triethylamine of from zero to less than 5 percent by weight, preferably less than 3 percent by weight, at a partial pressure of 3.46 mbar and a temperature of 22°C.

The silicoaluminophosphate molecular sieves of US—A—4,440,871 (referred to therein as "SAPOs") are microporous crystalline silicoaluminophosphates, the pores of which are uniform and have nominal diameters of greater than about $3\times10^{-10}$ m (3 Angstroms) and whose essential empirical chemical composition in the as-synthesized and anhydrous form is

$$mR:(Si_xAl_yP_z)O_2$$

wherein "R" represents at least one organic templating agent present in the intracrystalline pore system; "m" represents the moles of "R" present per mole of $(Si_xAl_yP_z)O_2$; "m" has a value of from 0.02 to 0.3; "x", "y" and "z" represent the mole fractions of silicon, aluminum and phosphorus respectively, present as tetrahedral oxides, said mole fractions being such that they are within the pentagonal compositional area defined by points ABCD and E of the ternary diagram which is Fig. 1 of the drawings of US—A—4,440,871. The SAPO molecular sieves of US—A—4,440,871 are also described as silicoaluminophosphates having a three-dimensional microporous framework structure of $PO_2^+$, $AlO_2^-$ and $SiO_2$ tetrahedral units, and whose essential empirical chemical composition on an anhydrous basis is:

$$mR:(Si_xAl_yP_z)O_2$$

wherein "R" represents at least one organic templating agent present in the intracrystalline pore system; "m" represents the moles of "R" present per mole of $(Si_xAl_yP_z)O_2$ and has a value of from zero to 0.3; "x", "y" and "z" represent respectively, the mole fractions of silicon, aluminum and phosphorus present in the oxide moiety, said mol fractions being within the compositional area bounded by points A, B, C, D and E on the ternary diagram which is Fig. 1, said silicoaluminophosphate having a characteristic X-ray powder diffraction pattern which contains at least the d-spacings set forth below in any one of Tables I, III, V, VII, IX, XII, XVII, XXI, XXIII or XXV of US—A—4,440,871. Further, such crystalline silicoaluminophosphates may be calcined at a temperature sufficiently high to remove at least some of any organic templating agent present in the intracrystalline pore system. The silicoaluminophosphates of US—A—4,440,871 are generally referred to therein as "SAPO-n", as a class, or as "SAPO-n" wherein "n" is an integer denoting a particular SAPO as its preparation is reported in US—A—4,440,871.

SAPO catalysts

The specific SAPOs employed in the instant invention are characterized in their calcined form by an adsorption of isobutane of at least 2 percent by weight at a partial pressure of 665 mbar and a temperature of 20°C. The SAPO's are preferably also characterized in their calcined form by and adsorption of triethylamine of less than 5 percent by weight at a partial pressure of 3.46 mbar and a temperature of 22°C. SAPOs characterized by the above described adsorption of isobutane include, but are not limited to, SAPO-5, SAPO-11, SAPO-31, SAPO-37, SAPO-40, SAPO-41, and mixtures thereof.

The above characterization of the SAPOs employed in the instant invention relates to an adsorption characterization that is carried out on a SAPO which has been subjected to a post synthesis treatment, e.g., calcination or chemical treatment, to remove a substantial portion of the template "R" which is present as a result of synthesis. Although a particular SAPO is characterized herein by reference to its adsorption of isobutane or triethylamine as relating to the adsorption characteristics of the SAPO in its calcined form, the instant invention necessarily includes the use of a non-calcined or modified SAPOs which are characterized by such adsorption in the modified or calcined form, since upon use of such a non-calcined SAPO in the instant process at effective dewaxing conditions the SAPO will be calcined or hydrothermally treated *in situ* so as to have the characteristic adsorption of isobutane or triethylamine. Thus, the SAPO will be rendered *in situ* to a form characterized by the aforementioned adsorption characteristics. For example, an as-synthesized SAPO-11 is not characterized by the aforementioned adsorption of isobutane due to the presence of template "R" which is present as a result of synthesis, although the calcined form of SAPO-11 is characterized by the aforementioned adsorption of isobutane. Thus, reference to a SAPO having a particular adsorption characteristic in its calcined form is not intended to exclude the use of the SAPO in its as-synthesized form which upon *in-situ* calcination, hydrothermal treatment and/or other treatment, e.g., ion exchange with suitable atoms, would have such adsorption characteristics.

The SAPOs of the instant invention may be employed in conjunction with traditional dewaxing catalysts and hydrocracking catalysts and accordingly, optionally, a zeolitic aluminosilicate component may be employed in conjunction with the SAPO-containing catalysts. The zeolitic aluminosilicate component of such catalysts may be any aluminosilicate heretofore employed as a component in dewaxing catalysts. Representatives of the zeolitic aluminosilicates disclosed heretofore as employable as component parts of traditional dewaxing catalysts are Zeolite Y, steam stabilized Zeolite Y (ultra-stable Y), Zeolite X, Zeolite beta (US—A—3,308,069), Silicalite (US—A—4,061,724), Zeolite KZ-20 (US—A—3,445,727), Zeolite ZSM-3 (US—A—3,415,736), faujasite, LZ-10 (GB—A—2,014,970), US-Y, ZSM-type zeolites, erionite, mordenite, offretite, chabazite, FU-1-type zeolite, NU-type zeolites and mixtures thereof. Traditional dewaxing catalysts containing amounts of $Na_2O$ less than about one percent by weight are generally preferred.

Zeolite Y is disclosed in US—A—3,130,007; and steam stabilized Y Zeolites, e.g., ultra-stable Y-type zeolites.

Another zeolitic aluminosilicate employable herein is "LZ-210", is described in E.P.C. Publication No. 82,211 published June 29, 1983, incorporated herein by reference thereto. In one embodiment the hydrocracking catalyst disclosed in EP—A—0,124,120, may be employed as an optional LZ-210 containing hydrocracking component.

The term "ZSM-type" zeolites is generally employed in the art to refer to those zeolites denominated by the nomenclature "ZSM-n" where "n" is an integer. The ZSM-type aluminosilicates include but are not limited to ZSM-5, ZSM-11, ZSM-12, ZSM-23, ZSM-35, ZSM-38, ZSM-48; and other similar materials.

ZSM-5 is described in greater detail in US—A—3,702,886 and US—E—29,948. The entire descriptions contained within those patents, particularly the X-ray diffraction pattern of therein disclosed ZSM-5, are incorporated herein by reference.

ZSM-11 is described in US—A—3,709,979. That description, and in particular the X-ray diffraction pattern of said ZSM-11, is incorporated herein by reference.

ZSM-12 is described in US—A—3,832,449. That description, and in particular the X-ray diffraction pattern disclosed therein, is incorporated herein by reference.

ZSM-23 is described in US—A—4,076,842.

ZSM-35 is described in US—A—4,016,245.

ZSM-38 is more particularly describing US—A—4,046,859.

ZSM-48 is more particularly described in US—A—4,423,021. In addition, crystalline silicates such as silicalite (US—A—4,061,724) may be employed with the SAPOs of the instant invention.

The catalysts of the instant invention comprise at least one SAPO, as above characterized, and optionally, may also contain a hydrogenation catalyst and optionally, one or more traditional dewaxing or hydrocracking catalysts, including zeolitic aluminosilicate components. The relative amount of the SAPO component or traditional dewaxing component, if any, will depend at least in part, on the selected hydrocarbon feedstock and on the desired pour point of the product, but in all instances an effective amount of at least one SAPO is employed. When a zeolitic aluminosilicate is employed as a part of the traditional dewaxing component the relative weight ratio of the zeolitic aluminosilicate to the SAPO is generally between 1:10 and 500:1, desirably between 1:10 and 200:1, preferably between 1:2 and 50:1, and most preferably is between 1:1 and 20:1. The zeolitic aluminosilicate and SAPO may be ion-exchanged with a selected cation(s) and/or thermally treated either before or after mixture with each other or after such have been added separately or concurrently to one or more inorganic oxide matrix components. When the SAPO molecular sieves are ion exchanged such are preferably exchanged with a hydrogen-forming cation species, e.g. $NH_4^+$, $H^+$, quaternary ammonium cations, etc. The SAPO preferably has at least part of its cations as hydrogen-forming cation species.

Hydrodewaxing catalysts may optionally contain a hydrogenation component of the type commonly employed in dewaxing catalysts. The hydrogenation component may be selected from the group of hydrogenation catalysts consisting of one or more metals of Group VI B and Group VIII, including the salts, complexes and solutions containing such metals. The preferred hydrogenation catalyst is at least one of the group of metals, salts and complexes selected from the group consisting of at least one of platinum, palladium, rhodium, iridium and mixtures thereof or at least one from the group consisting of nickel, molybdenum, cobalt, tungsten, titanium, chromium and mixtures thereof. As recognized in the art, the noble and base metals will not generally be employed in the same catalyst system. Reference to the catalytically active metal or metals is intended to encompass such metal or metals in the elemental state or in some form such as an oxide, sulfide, halide, carboxylate and the like.

The hydrogenation component is present in an effective amount to provide an effective hydrodewaxing catalyst. When the hydrogenation catalysts is a noble metal it is generally present in an amount between 0.05% and 1.5% by weight based on the total weight of the dewaxing catalyst including the weight of any binder or matrix material which may be present, as hereinafter discussed, although effective amounts outside this range may be employed. Although effective amounts in excess of 1.5 percent by weight may be employed, the preferred effective amount of the noble metal hydrogenation component is between 0.3% and 1.2% by weight. When the hydrogenation catalyst is a base metal(s) the effective amount will generally be between 1.0% and 30% percent by weight or more of the base metal, expressed as the oxide(s), based on the total weight of the dewaxing catalyst, although effective amounts outside this range may be employed.

The final form of the hydrogenation component is not narrowly limited herein but may be a metal oxide, metal sulfide or other catalytically active form. Since sulfur is typically present in the hydrocarbon feedstock being treated, the actual form of some of the hydrogenation component(s) may well be at least in part a sulfide due to *in situ* reactions. When a noble metal is employed as the hydrogenation component the catalyst is generally activated in air and then reduced in a hydrogen atmosphere. When base metals are employed such are usually treated with a sulfur compound.

The hydrogenation components can be incorporated into the overall catalyst composition by any one of numerous procedures. In general it has been observed that it is desirable to add the hydrogenation component to the catalyst as a separate component rather than provide such by ion exchange or impregnation of the SAPO component. They can be added either to the SAPO component, zeolitic aluminosilicate component, if any, or to any metal oxide or to a combination thereof by ion exchange, impregnation, occlusion and the like. In the alternative, multiple hydrogenation components (two or more) may be added as powders in the formulation of the catalyst. They may be added by co-mulling, impregnation, or ion exchange whereby one or more may be added to SAPO and/or zeolitic aluminosilicate by impregnation, co-mulling or co-precipitation. For example, noble or base metal compounds, such as the sulfides, oxides or water-soluble salts, can be added by co-mulling, impregnation or precipitation before

the composite is finally calcined. In the alternative these components can be added to the finished particle by impregnation with an aqueous, alcoholic, hydrocarbon or other nonaqueous solution of soluble compounds or precursors.

Although the hydrogenation components can be combined with the SAPO and/or zeolitic aluminosilicate, if any, as the oxides such is generally not the case. They are usually added as a metal salt which can be thermally converted to the corresponding oxide in an oxidizing atmosphere or reduced to the metal with hydrogen or other reducing agent. The composition can be sulfided by reaction with a sulfur donor such as carbon disulfide, hydrogen sulfide, hydrocarbon thiols, elemental sulfur, and the like, described above. The above oxidizing or sulfiding processes are generally carried out on catalyst compositions which have been partially dried (as desired), tabletted, pelleted, extruded (with binder or matrix), or formed by other means and then calcined, e.g. at a temperature above 315.5°C, usually above 426.7°C.

It is well known in the art that dewaxing catalysts, are generally employed with a binder material or, as commonly referred to, with an inorganic oxide matrix which can be inert or also catalytically active. For example inorganic matrices such as silica, alumina, silica-alumina, silica-zirconia, silica-magnesia, alumina-boria, alumina-titania and the like and mixtures thereof may be employed. An inorganic oxide need not always be employed such as in the case of a preform containing the SAPO or may be employed in an amount between 1% and 95% by weight, preferably between 10% and 80% by weight, based on the total weight of the dewaxing catalyst.

The term "crude oil feedstock" is used herein to denominate any crude oil feedstock or portion thereof and includes full range crude oils from primary, secondary or tertiary recovery from conventional or offshore oil fields and to the myriad of feedstocks derived therefrom. "Crude oil feedstocks" may also be "syncrudes" such as those that can be derived from coal, Fischer Tropsch fuel products, shale oil, tar sands and bitumens. The crude oil feedstock may be virgin (straight run) or generated synthetically by blending. Such crude oil feedstocks are traditionally desalted prior to use since sodium chloride is known to be a poison in many dewaxing operations. Further, the term "crude oil feedstocks" is intended to include component parts of crude oils which have heretofore been generally employed as feedstocks or potential feeds and includes feeds such as distillate gas oils, heavy vacuum gas oils, VGO, atmospheric and vacuum resids, syncrudes, pulverized coal and fractions boiling above the traditional end of the gasoline boiling range which generally includes compounds containing greater than about eleven carbon atoms and combinations thereof.

The hydrocarbon feedstock for dewaxing typically boils above 176.7°C, preferably between 204.4°C and 648.9°C and more preferably between 204.4°C and 482.2°C. The hydrocarbon feedstock may be pre-treated in a hydrotreater to reduce, i.e. remove, compounds which contain sulfur and/or nitrogen. The hydrocarbon feedstock may have a significant sulfur content, present as hydrogen sulfide, ranging from 0.1 to 3 weight percent, and nitrogen content, present as ammonia, in an amount up to 20,000 ppm. Temperature, space velocity, and other process variables may be adjusted to compensate for the effects of nitrogen on the dewaxing catalyst activity. The feedstock is contacted in the dewaxing reaction zone with the dewaxing catalyst and, optionally, in the presence of hydrogen-containing gas and/or a hydrogen generating compound. In hydrodewaxing, hydrogen is consumed in the hydrodewaxing process and an excess of hydrogen is typically maintained in the reaction zone. Advantageously, a hydrogen-to-oil (feed) ratio of at least 28.32 $m^3$ hydrogen per 159 liters of feed (1,000 standard cubic feet of hydrogen per barrel of feed (SCFB)) is employed, and the hydrogen-to-oil ratio may range up to 56.6 $m^3$ (20,000 SCFB). Preferably, 113 to 340 $m^3$ (4,000 to 12,000 SCFB) is employed. Typically dewaxing and hydrodewaxing conditions are disclosed in US—E—28,398, US—A—3,852,189 and US—A—4,282,085.

The instant process is carried out under effective catalytic dewaxing or hydrodewaxing conditions. Catalytic dewaxing is generally carried out at a LHSV (liquid hourly space velocity) between 0.2 and 50, a temperature between 260.0°C and 648.8°C, a pressure between subatmospheric and 506.5 bar. Hydrodewaxing is generally carried out at a LHSV between 0.1 and 15, a temperature between 204.4°C and 482.2°C, at a pressure between 1.702 bar and 173.3 bar and using molar ratios of hydrogen to hydrocarbon feedstock between about 1 and about 100.

The following examples were carried out to demonstrate the use of the dewaxing catalysts and dewaxing processes of the invention and are not intended to be limiting thereof.

Examples 1 to 3

Three catalysts were prepared for evaluation as dewaxing catalysts and were denominated Catalysts A, B and C. All weights are given as anhydrous weights unless otherwise designated. The catalysts were prepared as follows:

a) Catalyst A is a catalyst according to the invention and was prepared using SAPO-11. SAPO-11 was prepared according to Example 17 of US—A—4,440,871, except that the digestion time was 24 hours. Catalyst A was prepared by blending 80 grams of SAPO-11 with 80 grams of a nickel-tungsten-alumina catalyst, 100 grams of a silica solution (40 percent by weight silica in water) and an ammonium acetate solution (4 grams of ammonium acetate in 70 cubic centimeters (cc) of water). The mixture was extruded as 1.59 mm extrudates and dried at 100°C for about 16 hours and calcined in air at 500°C for 2 hours. The calcination at 500°C was carried out in a stepwise manner by heating the catalyst from room temperature to

220°C over a one hour period, heating the catalyst at 220°C for 1.5 hours, heating the catalyst from 220°C to 500°C over a one hour period and then heating the catalyst at 500°C for 2 hours. The nickel-tungsten-alumina hydrogenation component was prepared by pore filling 85 grams of a pseudoboehmite alumina with an aqueous solution (119 cc) containing 31.5 grams of $Ni(NO_3) \cdot 6H_2O$ and 33.7 grams ammonium metatungstate. The mixture was dried as above described for Catalyst A except the final temperature was 480°C instead of 500°C. Catalyst A, expressed as the weight percent oxides, was prepared to be: 35% SAPO-11, 35% $Al_2O_3$, 17% $SiO_2$, 3% NiO and 10% $WO_3$. Chemical analysis of Catalyst A for NiO and $WO_3$ gave 2.8 wt.% NiO and 9.6 wt.% $WO_3$.

b) Catalyst B was prepared according to this invention using a SAPO-31 prepared according to Example 51 of US Patent No. 4,440,871. SAPO-31 (72 grams) was blended with 46.5 grams of an aqueous silica solution (40 wt.% silica). The mixture was extruded into 1.59 mm pellets which were dried at 100°C and calcined at 500°C, by the procedure above described for Catalyst A. The calcined extrudates were treated in air (saturated with water at 25°C) at 650°C for three hours. The chemical composition of the catalyst was prepared to be 80 wt.% SAPO-31 and 20 wt.% $SiO_2$.

c) Catalyst C is a comparative catalyst and was prepared using SAPO-34. SAPO-34 was prepared according to the procedure of Examples 32 to 38 of US—A—4,440,871. SAPO-34 is not characterized by an isobutane adsorption of at least 2 percent by weight at a partial pressure of 665 mbar and a temperature of 20°C whereas SAPO-11 and SAPO-31 are so characterized. Catalyst C was prepared by mixing 30 grams of SAPO-34 with 50 grams of an alumina sold under the trade designation "PA" by American Cyanamide, Stamford, CT), and 20 grams of a pseudoboehmite alumina. The above mixture was mixed with 3 cc of concentrated nitric acid and 50 cc of water and extruded as 1.59 mm extrudates. The extrudates were dried at 100°C and calcined at 500°C by the procedure above described for Catalyst A. The extrudates (53 grams) were pore filled by mixing them with a solution (35 cc) containing 10.7 grams of $Ni(NO_3)_2 \cdot 6H_2O$ and 20.9 grams of ammonium metatungstate. The extrudates were then dried at 500°C as above described for Catalyst A. Catalyst C expressed as the weight percent oxides, was prepared to give: 3.5% NiO, 22% $WO_3$, 22.4% SAPO-34 and 52.2% alumina.

Example 4

The catalysts of Examples 1 to 3 were evaluated for hydrodewaxing and their use in reducing the pour point of hydrocarbon feedstocks by contacting a selected feedstock with hydrogen at a total pressure of 138.8 bar at a Liquid Hourly Space Velocity (LHSV) between 0.25 to 0.8 and a hydrogen flow rate of 10,000 SCFB (Standard Cubic Feet per Barrel) at temperatures between 371.1°C and 426.7°C. Products boiling below 315.5°C were collected and evaluated and the conversion given based on these products. The feedstock employed in the dewaxing examples set forth hereinafter was a vacuum gas oil having an IBP (Initial Boiling Point) of 293.3°C and FBP (Final Boiling Point) of 620°C (both determined by ASTM test method D-2887), API Gravity of 22.3 and having a pour point of greater than 35°C. The feedstock was characterized by the following physical and chemical characteristics:

| | Weight percent |
|---|---|
| Paraffins | 24.1 |
| Mono-naphthenes | 9.5 |
| Poly-naphthenes | 8.7 |
| Mono-aromatics | 13.3 |
| Di-aromatics | 9.3 |
| Tri-aromatics | 4.3 |
| Tetra-aromatics | 2.7 |
| Penta-aromatics | 0.7 |

The reactor effluents were collected and the fraction of the feed ("Conversion" on a weight basis) converted to products boiling below 315.5°C determined by simulated distillation (ASTM test method D-2887). The conversion is reported as the weight percent of feedstock converted to products boiling below 315.5°C. The pour points were determined by ASTM test method D-97-66 on the reactor effluents after maintaining the effluent at about 54.4°C during its collection. The results in Tables A, B, C and D demonstrate that at comparable conversions that Catalysts A and B provided a reduction in the pour point of the products superior to that obtained by use of Catalyst C. The data in Tables A and C are graphically depicted in Fig. 1 and show the decrease in pour point as a function of conversion of products obtained using SAPO-11 (Catalyst A) as compared to SAPO-34 (Catalyst C). The data in Tables B and D are

graphically depicted in Fig. 2 and show the decrease in pour point as a function of conversion of products obtained using SAPO-31 (Catalyst B) as compared to SAPO-34 (Catalyst C). Figs. 1 and 2 demonstrate the decrease in the pour point of the products obtained by Catalyst A and B as compared to Catalyst C. Further, the decrease in pour point increases at a greater rate using Catalysts A and B with increasing conversion, indicating Catalysts A and B are more selective dewaxing catalysts.

TABLE A (Catalyst A)

| Temp, °C | LHSV | Conv. | Pour point, °C |
|---|---|---|---|
| 371.7 | 0.25 | 17.3 | 4.4 |
| 398.3 | 0.25 | 39.8 | −26.1 |
| 385.0 | 0.25 | 28.5 | −12.2 |

TABLE B (Catalyst B)

| Temp, °C | LHSV | Conv. | Pour point, °C |
|---|---|---|---|
| 385.0 | 1.0 | 4.3 | 23.9 |
| 398.3 | 1.0 | 6.9 | 18.3 |
| 411.1 | 1.0 | 13.0 | 10.0 |
| 427.2 | 1.0 | 26.5 | −3.9 |

TABLE C (Catalyst C)

| Temp, °C | LHSV | Conv. | Pour point, °C |
|---|---|---|---|
| 372.2 | 0.25 | 17.6 | 29.4 |
| 385.0 | 0.25 | 23.3 | 26.7 |
| 398.9 | 0.25 | 35.0 | 23.9 |
| 412.2 | 0.25 | 47.1 | 15.6 |

TABLE D (Catalyst C)

| Temp, °C | LHSV | Conv. | Pour point,°C |
|---|---|---|---|
| 413.3 | 1.0 | 29.9 | 26.7 |
| 400.6 | 1.0 | 18.1 | 29.4 |
| 400.0 | 1.0 | 17.0 | 29.4 |

Example 5

A catalyst was prepared employing SAPO-11 to demonstrate the hydrocracking and dewaxing functionality of the catalysts of this invention. SAPO-11 was prepared according to the procedure described in Example 18 of US Patent No. 4,440,871, except the final molar ratio of di-n-propylamine to $Al_2O_3$ was 1.0 to 1. The catalyst was prepared by mixing 150 grams of SAPO-11 with 100 grams of Kaiser medium density alumina and a sufficient amount of water to form an extrudate mixture (paste). The mixture was extruded into 1.59 mm extrudates and dried in air at 100°C for 16 hours. The extrudates were then calcined in air at 480°C for 2 hours. The extrudates (153 gram) were then mixed (pore filled) with 150 cc of an aqueous solution containing 40.0 grams of nickel nitrate hexahydrate and 48.8 grams of ammonium metatungstate. The mixture was then dried for 16 hours at 100°C and then calcined at 480°C for 2 hours. The catalyst was prepared to contain, given as the weight percent oxide: 5 wt.% NiO; 23 wt.% $WO_3$; 36 wt.% SAPO-11; and 36% $Al_2O_3$. Chemical analysis for NiO and $WO_3$ gave 5.4 wt.% NiO and 23.0 wt.% $WO_3$.

The catalyst was evaluated by contacting a selected feedstock with hydrogen at a total pressure of 138.8 bar at a Liquid Hourly Space Velocity (LHSV) of one and a hydrogen flow rate of 10,000 SCFB (Standard Cubic Feed per Barrel) at temperatures between about 371.1°C and 448.9°C. Products boiling

below 395.5°C, were collected and evaluated and the conversion given based on these products. The feedstock employed in this example was a vacuum gas oil having an IBP (Initial Boiling Point) of 293.3°C and a FBP (Final Boiling Point) of 620.0°C (both determined by ASTM test method D-2887), API Gravity of 22.3 and having a pour point of greater than 35.0°C. The feedstock was characterized by the following physical and chemical characteristics:

| | Weight percent |
|---|---|
| Paraffins | 24.1 |
| Mono-naphthenes | 9.5 |
| Poly-naphthenes | 8.7 |
| Mono-aromatics | 13.3 |
| Di-aromatics | 9.3 |
| Tri-aromatics | 4.3 |
| Tetra-aromatics | 2.7 |
| Penta-aromatics | 0.7 |

The products of each evaluation were collected and the fraction of the feed (weight basis) converted to products boiling below 315.5°C determined by simulated distillation. The conversion is reported as the weight percent of feedstock converted to products boiling below 315.5°C. The pour points were determined according to ASTM test method D-97-66 as in Example 4.

The conversion and pour point were as follows:

| Temperature (°C) | Conversion | Pour point (°C) |
|---|---|---|
| 371.1 | 7.52 | 29.4 |
| 384.4 | 9.84 | 26.7 |
| 398.3 | 17.95 | 21.1 |
| 409.4 | 30.06 | 12.8 |
| 420.0 | 41.60 | −3.9 |
| 426.1 | 36.64 | 1.67 |
| 420.0 | 29.89 | 4.4 |
| 420.0 | 33.74 | 7.2 |
| 430.6 | 43.64 | −1.1 |
| 438.3 | 45.12 | −1.1 |
| 438.9 | 45.50 | −1.1 |
| 393.3 | 56.88 | −6.6 |

The above data demonstrate the conversion of the higher boiling feedstock to lower boiling products in the presence of hydrogen and that such products are characterized by a lower pour point than the initial feedstock.

**Claims**

1. The process for dewaxing a hydrocarbon feedstock characterized in that it comprises contacting the hydrocarbon feedstock at a LHSV (liquid hourly space velocity) between 0.2 and 50, a temperature between 260.0°C and 648.8°C, a pressure between subatmospheric and 506.5 bar with a dewaxing catalyst

comprising an effective amount of at least one silicoaluminophosphate (SAPO), whose essential empirical chemical composition in the as-synthesized and anhydrous form is

$$mR:(Si_xAl_yP_z)O_2$$

wherein "R" represents at least one organic templating agent present in the intracrystalline pore system; "m" has a value of from 0.02 to 0.3; "m" represents the moles of "R" present per mole of $(Si_xAl_yP_z)O_2$, "x", "y" and "z" represent the mole fractions of silicon, aluminum and phopshorus respectively, present as tetrahedral oxides, said mole fractions being such that they are within a pentagonal compositional area defined by points ABCD and E of a ternary diagram, the said points A, B, C, D and E representing the following values for "x", "y" and "z"

| | Mole fraction | | |
|---|---|---|---|
| Point | x | y | z |
| A | 0.01 | 0.47 | 0.52 |
| B | 0.94 | 0.01 | 0.05 |
| C | 0.98 | 0.01 | 0.01 |
| D | 0.39 | 0.60 | 0.01 |
| E | 0.01 | 0.60 | 0.39 |

and having in its calcined form an adsorption of isobutane of at least 2 percent by weight at a pressure of 665 mbar and a temperature of 20°C.

2. The process for hydro-dewaxing a hydrocarbon feedstock to reduce its pour point characterized in that it comprises contacting the hydrocarbon feedstock with a catalyst in the presence of hydrogen at a LHSV between 0.1 and 15, a temperature between 204.4°C and 482.2°C, at a pressure between 1.702 and 173.3 bar and using molar ratios of hydrogen to hydrocarbon feedstock between 1 and 100 wherein the catalyst comprises at least one hydrogenation component and at least one silicoaluminophosphate according to the definition of claim 1 having in its calcined form an adsorption of isobutane of at least 2 percent by weight at a pressure of 665 mbar and a temperature of 20°C.

3. The process of claim 1 or claim 2 wherein said SAPO is further characterized in its calcined form by an adsorption of triethylamine of from zero to less than 5 percent by weight at a pressure of 3.46 mbar and a temperature of 22°C.

4. The process of claim 3 wherein said adsorption of triethylamine is less than 3 percent by weight.

5. The process of claim 1 or claim 2 wherein said catalyst contains an effective amount of at least one zeolitic aluminosilicate having activity wherein said zeolitic aluminosilicate is present in a weight ratio between 1:10 and 500:1 of said zeolitic aluminosilicate to said SAPO molecular sieve.

6. The process of claim 5 wherein the weight ratio of zeolitic aluminosilicate to said SAPO is between 1:2 and 50:1.

7. The process of claim 6 wherein the weight ratio of zeolitic aluminosilicate to said SAPO is between 1:1 and 20:1.

8. The process of claim 1 or 2 wherein said catalyst comprises an inorganic oxide matrix component present in an amount between 0 and 99 percent by weight, based on the total weight of said catalyst.

9. The process of claim 8 wherein said inorganic oxide matrix component is present in an amount between 5 and 95 percent by weight.

10. The process of claim 1 or claim 2 wherein said SAPO has at least part of its cations as hydrogen-forming species.

11. The process of claim 10 wherein said hydrogen-forming species is $NH_4^+$ or $H^+$.

12. The process of claim 1 wherein the process is carried out by contacting a hydrocarbon feedstock boiling between 204.4°C and 648.9°C with said catalyst at a temperature between 260°C and 648.9°C at a pressure between subatmospheric to 665 mbar and a LHSV between 0.2 and 50.

13. The process of claim 2 wherein the process is carried out by contacting a hydrocarbon feedstock boiling between 204.4°C and 648.9°C, in the presence of hydrogen with said catalyst at a temperature between 204.4°C and 482.2°C, at a pressure between 1.702 bar and 173.3 bar, and at a molar ratio of hydrogen to hydrocarbon feedstock between about 1 and about 100.

14. The process of claim 4 wherein said zeolite aluminosilicate is ZSM-5.

15. The process of claim 9 wherein said inorganic oxide matrix component is selected from the group

consisting of clays, silicas, aluminas, silica-aluminas, silica-zirconias, silica-magnesia, alumina-borias, alumina-titanias and mixtures thereof.

16. The process of claim 1 or claim 2 wherein said SAPO is selected from the group consisting of SAPO-5, SAPO-11, SAPO-31, SAPO-37, SAPO-40, SAPO-41 and mixtures thereof.

17. The process of claim 1 or claim 2 wherein said hydrocarbon feedstock is selected from the group consisting of heating fuel, jet fuel, lube oils, distillate gas oils, naphtha, reformate, kerosene, diesel fuel, heavy vacuum gas oils, Fischer Tropsch reaction products, VGO, atmospheric resids, vacuum resids, syncrudes, pulverized coal and mixtures thereof.

18. The process of claim 4 wherein said zeolitic aluminosilicate is selected from the group consisting of zeolite Y, ultra-stable Y-type zeolites, zeolite X, zeolite beta, silicalite, zeolite KZ-20, faujasite, LZ-210, LZ-10, ZSM-type zeolites and mixtures thereof.

19. The process according to claim 2 wherein the hydrogenation catalyst is at least one metal selected from the group consisting of Pt, Pd, Rh, Ru, Ni, W, Mo, Co, Ti, Cr and mixtures thereof.

20. The process of claim 19 wherein said metal is selected from the group consisting of Pt, Pd, Rh, Ru and mixtures thereof and is present in an effective amount between 0.05 weight percent and 1.5 weight percent.

21. The process of claim 19 wherein the metal is selected from the group consisting of Ni, W, Mo, Co, Ti, Cr and mixtures thereof and is present in an amount between 1.0 and 30 percent by weight.

22. A catalyst comprising an aluminosilicate and at least one SAPO according to the definition of claim 1 characterized in its calcined form by an adsorption of isobutane of at least 2 percent by weight at a pressure of 665 mbar and a temperature of 20°C wherein the weight ratio between said aluminosilicate and SAPO is between 1:10 and 500:1, and at least one metal selected from the group consisting of nickel, cobalt, tungsten, molybdenum, platinum, palladium, chromium, rhodium, ruthenium and titanium.

23. The catalyst of claim 22 wherein said SAPO molecular sieve is further characterized in its calcined form by an adsorption of triethylamine of from zero to less than 5 percent by weight at a pressure of 3.46 mbar and a temperature of 22°C.

24. The catalyst of claim 22 or claim 23 wherein said catalyst contains at least one zeolitic aluminosilicate selected from the group consisting of zeolite Y, ultra-stable Y zeolite, zeolite X, silicalite zeolite beta, zeolite KZ-20, faujasite, LZ-210, LZ-10, ZSM-type zeolites and mixtures thereof.

25. The catalyst of claim 24 wherein said catalyst contains from 1 to 99 percent by weight of at least inorganic oxide matrix component.

26. The catalyst of claim 25 wherein the inorganic oxide matrix component is selected from the group consisting of clays, silicas, aluminas, silica-aluminas, silica-zirconias, silica-magnesia, alumina-borias, alumina-titanias and mixtures thereof.

27. The catalyst of claim 22 or claim 23 wherein said SAPO is selected from the group consisting of SAPO-5, SAPO-11, SAPO-31, SAPO-37, SAPO-40, SAPO-41 and mixtures thereof.

28. The catalyst of claim 27 wherein said zeolitic aluminosilicate is selected from the group consisting of Y zeolite, ultra-stable Y-type zeolite, LZ-210, LZ-10, silicalite and ZSM-5 and mixtures thereof.

**Patentansprüche**

1. Verfahren zum Entparaffinieren eines Kohlenwasserstoff-Ausgangsmaterials, dadurch gekennzeichnet, daß es umfaßt das in Kontakt bringen des Kohlenwasserstoff-Ausgangsmaterials bei einer LHSV (Raumgeschwindigkeit der Flüssigkeit pro Stunde) zwischen 0,2 und 50 einer Temperatur zwischen 260°C und 648,8°C, einem Druck zwischen subatmosphärischem Druck und 506,5 bar mit einem Entparaffinierungskatalysator, enthaltend eine wirksame Menge wenigstens eines Silicoaluminophosphats (SAPO), dessen empirische chemische Zusammensetzung in der wasserfreien und "as synthesized"-Form im wesentlichen ist

$$mR:(Si_xAl_yP_z)O_2$$

worin "R" wenigstens ein organisches Templat-Agens darstellt, das in dem intrakristallinen Porensystem anwesend ist; "m" einen Wert von 0,02 bis 0,3 hat; "m" die Mole von "R" darstellt, die pro Mol $(Si_xAl_yP_z)O_2$ anwesend sind, "x", "y" und "z" jeweils die Molfraktionen von Silicium, Aluminium und Phosphor darstellen, die als tetraedrische Oxide vorliegen, wobei diese Molfraktionen so gewählt sind, daß sie innerhalb eines pentagonalen Zusammensetzungs-Bereichs liegen, der durch die Punkte A, B, C, D und E eines ternären Diagramms definiert ist, wobei diese Punkte A, B, C, D und E die nachfolgenden Werte für "x", "y" und "z" aufweisen,

| | Mol-Fraktion | | |
|---|---|---|---|
| Punkt | x | y | z |
| A | 0,01 | 0,47 | 0,52 |
| B | 0,94 | 0,01 | 0,05 |
| C | 0,98 | 0,01 | 0,01 |
| D | 0,39 | 0,60 | 0,01 |
| E | 0,01 | 0,60 | 0,39 |

das in seiner calcinierten Form eine Isobutan-Adsorption von wenigstens 2 Gew.% bei einem Druck von 665 mbar und einer Temperatur von 20°C aufweist.

2. Verfahren zum Entparaffinieren eines Kohlenwasserstoff-Ausgangsmaterials, um dessen Stockpunkt zu reduzieren, dadurch gekennzeichnet, daß es umfaßt das in Kontakt bringen des Kohlenwasserstoff-Ausgangsmaterials mit einem Katalysator in Gegenwart von Wasserstoff bei einem LHSV zwischen 0,1 und 15, einer Temperatur zwischen 204,4°C und 482,2°C, bei einem Druck zwischen 1,702 und 173,3 bar und Verwendung eines Molverhältnisses von Wasserstoff zu Kohlenwasserstoff-Ausgangsmaterial zwischen 1 und 100, wobei der Katalysator wenigstens eine Hydrogenierungs-Komponente enthält und wenigstens ein Silicoaluminophosphat gemäß der Definition von Anspruch 1, das in seiner calcinierten Form eine Isobutan-Adsorption von wenigstens 2 Gew.% bei einem Druck von 665 mbar und einer Temperatur von 20°C aufweist.

3. Verfahren nach Anspruch 1 oder Anspruch 2, bei dem dieser SAPO weiter gekennzeichnet ist in seiner calcinierten Form durch eine Adsorption von Triethylamin von zwischen Null und weniger als 5 Gew.% bei einem Druck von 3,46 mbar und einer Temperatur von 22°C.

4. Verfahren nach Anspruch 3, bei dem diese Adsorption von Triethylamin weniger als 3 Gew.% beträgt.

5. Verfahren nach Anspruch 1 oder Anspruch 2, bei dem der Katalysator eine wirksame Menge wenigstens eines aktiven zeolithischen Aluminosilikats enthält, wobei dieses zeolithische Aluminosilikat in einem Gewichtsverhältnis zwischen 1:10 und 500:1 von zeolithisches Aluminosilikat zu SAPO Molekularsieb anwesend ist.

6. Verfahren nach Anspruch 5, bei dem das Gewichtsverhältnis von zeolithischem Aluminosilikat zu SAPO zwischen 1:2 und 50:1 beträgt.

7. Verfahren nach Anspruch 6, bei dem das Gewichtsverhältnis von zeolithischem Aluminiumsilikat zu SAPO zwischen 1:1 und 20:1 beträgt.

8. Verfahren nach Anspruch 1 oder 2, bei dem der Katalysator eine anorganische Oxidmatrix-Komponente enthält, die in einer Menge zwischen 0 und 99 Gew.% auf Basis des Gesamtgewichts des Katalysators anwesend ist.

9. Verfahren nach Anspruch 8, bei dem die anorganische Oxidmatrix-Komponente in einer Menge zwischen 5 und 95 Gew.% anwesend ist.

10. Verfahren nach Anspruch 1 oder Anspruch 2, bei dem wenigstens ein Teil der Kationen des SAPO als Wasserstoff-bildende Spezies vorliegen.

11. Verfahren nach Anspruch 10, bei dem die Wasserstoff-bildende Spezies $NH_4^+$ oder $H^+$ ist.

12. Verfahren nach Anspruch 1, das ausgeführt wird durch in Kontakt bringen eines Kohlenwasserstoff-Ausgangsmaterials, das zwischen 204,4°C und 648,9°C siedet, mit dem Katalysator bei einer Temperatur zwischen 260°C und 648,9°C bei einem Druck zwischen subatmosphärischem Druck und 665 mbar und einem LHSV zwischen 0,2 und 50.

13. Verfahren nach Anspruch 2, das ausgeführt wird durch in Kontakt bringen eines Kohlenwasserstoff-Ausgangsmaterials, das zwischen 204,4°C und 648,9°C siedet, in Gegenwart von Wasserstoff mit dem Katalysator bei einer Temperatur zwischen 204,4°C und 482,2°C, einem Druck zwischen 1,702 bar und 173,3 bar und einem molaren Verhältnis von Wasserstoff zu Kohlenwasserstoff-Ausgangsmaterial zwischen etwa 1 und etwa 100.

14. Verfahren nach Anspruch 4, bei dem das zeolithische Aluminosilikat ZSM-5 ist.

15. Verfahren nach Anspruch 9, bei dem die anorganische Oxidmatrix-Komponente ausgewählt wird aus der Gruppe bestehend aus Tonen, Siliciumoxiden, Aluminiumoxiden, Silicium-Aluminiumoxiden, Silicium-Zirkoniumoxiden, Silicium-Magnesiumoxiden, Aluminium-Boroxiden, Aluminium-Titanoxiden und deren Mischungen.

16. Verfahren nach Anspruch 1 oder 2, bei dem der SAPO ausgewählt wird aus der Gruppe bestehend aus SAPO-5, SAPO-11, SAPO-31, SAPO-37, SAPO-40, SAPO-41 und deren Mischungen.

17. Verfahren nach Anspruch 1 oder Anspruch 2, bei dem das Kohlenwasserstoff-Ausgangsmaterial

ausgewählt wird aus der Gruppe bestehend aus Heizöl, Düsentribestoff, Schmierölen, Destillat-Gasölen, Naphtha, Reformat, Kerosin, Dieseltreibstoff, schweren Vacuum-Gasölen, Fischer-Tropsch-Reaktionsprodukten, VGO, atmosphärischen Rückständen, Vacuumrückständen, synthetischen Rohölen, pulverförmiger Kohle sowie deren Mischungen.

18. Verfahren nach Anspruch 4, bei dem das zeolithische Aluminosilikat ausgewählt wird aus der Gruppe bestehend aus Zeolith Y, ultrastabilen Zeolithen vom Y-Typ, Zeolith X, Zeolith Beta, Silikalit, Zeolith KZ-20, Faujasit, LZ-210, LZ-10, Zeolithen vom ZSM-Typ und deren Mischungen.

19. Verfahren nach Anspruch 2, bei dem der Hydrogenierungskatalysator wenigstens ein Metall ausgewählt aus der Gruppe bestehend aus Pt, Pd, Rh, Ru, Ni, W, Mo, Co, Ti, Cr und deren Mischungen ist.

20. Verfahren nach Anspruch 19, bei dem das Metall ausgewählt wird aus der Gruppe bestehend aus Pt, Pd, Rh, Ru und deren Mischungen und in einer wirksamen Menge zwischen 0,05 Gew.% und 1,5 Gew.% anwesend ist.

21. Verfahren nach Anspruch 19, bei dem das Metall, ausgewählt wird aus der Gruppe bestehend aus Ni, W, Mo, Co, Ti, Cr und deren Mischungen und in einer Menge zwischen 1,0 und 30 Gew.% anwesend ist.

22. Katalysator enthaltend ein Aluminosilikat und wenigstens einen SAPO gemäß der Definition von Anspruch 1, gekennzeichnet in seiner calcinierten Form durch eine Adsorption von Isobutan von wenigstens 2 Gew.% bei einem Druck von 665 mbar und einer Temperatur von 20°C, wobei das Gewichtsverhältnis zwischen dem Aluminosilikat und dem SAPO zwischen 1:10 und 500:1 beträgt, und wenigstens ein Metall ausgewählt aus der Gruppe bestehend aus Nickel, Kobalt, Wolfram, Molybdän, Platin, Palladium, Chrom, Rhodium, Ruthenium und Titan.

23. Katalysator gemäß Anspruch 22, bei dem das SAPO-Molekularsieb weiter in seiner calciniertem Form gekennzeichnet ist durch eine Adsorption von Triethylamin von zwischen 0 und weniger als 5 Gew.% bei einem Druck von 3,46 mbar und einer Temperatur von 22°C.

24. Katalysator gemäß Anspruch 22 oder Anspruch 23, wobei dieser Katalysator wenigstens ein zeolithisches Aluminosilikat enthält ausgewählt aus der Gruppe bestehend aus Zeolith Y, ultrastabilem Y-Zeolith, Zeolith X, Silikalit, Zeolith Beta, Zeolith KZ-20, Faujasit, LZ-210, LZ-10, Zeolithen vom ZSM- Typ und deren Mischungen.

25. Katalysator nach Anspruch 24, wobei dieser Katalysator zwischen 1 und 99 Gew.% wenigstens einer anorganischen Oxidmatrix-Komponente enthält.

26. Katalysator nach Anspruch 25, bei dem die anorganische Oxidmatrix-Komponente ausgewählt wird aus der Gruppe bestehend aus Tonen, Siliciumoxiden, Aluminiumoxiden, Silicium-Aluminiumoxiden, Silicium-Zirkonoxiden, Silicium-Magnesiumoxiden, Aluminium-Boroxiden, Aluminium-Titanoxiden und deren Mischungen.

27. Katalysator gemäß Anspruch 22 oder Anspruch 23, bei dem der SAPO ausgewählt wird aus der Gruppe bestehend aus SAPO-5, SAPO-11, SAPO-31, SAPO-37, SAPO-40, SAPO-41 und deren Mischungen.

28. Katalysator nach Anspruch 27, bei dem das zeolithische Aluminosilikat ausgewählt wird aus der Gruppe bestehend aus Y-Zeolith, ultrastabilem Zeolith vom Y-Typ, LZ-210, LZ-10, Silikalit, ZSM-5 und deren Mischungen.

## Revendications

1. Procédé de déparaffinage d'une charge hydrocarbonée, caractérisé en ce qu'il consiste à mettre en contact la charge hydrocarbonée à une VSHL (vitesse spatiale horaire de liquide) comprise dans l'intervalle de 0,2 à 50, une température comprise dans l'intervalle de 260,0°C à 648,8°C, sous une pression allant d'une pression inférieure à la pression atmosphérique à 506,5 bars, avec un catalyseur de déparaffinage comprenant une quantité efficace d'au moins un silico-aluminophosphate (SAPO), dont la composition chimique empirique essentielle, à l'état tel qu'obtenu par synthèse et sous forme anhydre, est

$$mR:(Si_xAl_yP_z)O_2$$

dans laquelle "R" représente au moins un agent organique servant de modèle présent dans le système de pores intracristallins; "m" a une valeur de 0,02 à 0,3; "m" représente le nombre de moles de "R" présentes par mole de $(Si_xAl_yP_z)O_2$, "x", "y" et "z" représentent, respectivement, les fractions molaires de silicium, d'aluminium et de phosphore, présents sous forme d'oxydes tétraédriques, lesdites fractions molaires étant choisies de manière qu'elles soient à l'intérieur d'une aire pentagonale de composition définie par les points ABCD et E d'un diagramme ternaire, lesdits points A, B, C, D et E représentant les valeurs suivantes pour "x", "y" et "z"

| | | Fraction molaire | |
|---|---|---|---|
| Point | x | y | z |
| A | 0,01 | 0,47 | 0,52 |
| B | 0,94 | 0,01 | 0,05 |
| C | 0,98 | 0,01 | 0,01 |
| D | 0,39 | 0,60 | 0,01 |
| E | 0,01 | 0,60 | 0,39 |

et ayant sous forme calcinée une adsorption d'isobutane au moins égale à 2 pour cent en poids sous une pression de 665 mbars et à une température de 20°C.

2. Procédé d'hydrodéparaffinage d'une charge hydrocarbonée afin de réduire le point d'écoulement de cette dernière, caractérisé en ce qu'il consiste à mettre en contact la charge hydrocarbonée avec un catalyseur en présence d'hydrogène à une VSHL comprise dans l'intervalle de 0,1 à 15, à une température comprise dans l'intervalle de 204,4°C à 482,2°C, sous une pression comprise dans l'intervalle de 1,702 à 173,3 bars et en utilisant des rapports molaires de l'hydrogène à la charge hydrocarbonée compris dans l'intervalle de 1 à 100, dans lequel le catalyseur comprend au moins un constituant d'hydrogénation et au moins un silico-aluminophosphate suivant la définition de la revendication 1, présentant sous sa forme calcinée une adsorption d'isobutane au moins égale à 2 pour cent en poids sous une pression de 665 mbars et à une température de 20°C.

3. Procédé suivant la revendication 1 ou la revendication 2, dans lequel le SAPO est en outre caractérisé sous sa forme calcinée par une adsorption de triéthylamine comprise dans l'intervalle de zéro à moins de 5 pour cent en poids sous une pression de 3,46 mbars et à une température de 22°C.

4. Procédé suivant la revendication 3, dans lequel l'adsorption de triéthylamine est inférieure à 3% en poids.

5. Procédé suivant la revendication 1 ou la revendication 2, dans lequel le catalyseur contient une quantité efficace d'au moins un aluminosilicate zéolitique actif, ledit aluminosilicate zéolitique étant présent en un rapport pondéral compris dans l'intervalle de 1:10 à 500:1 dudit aluminosilicate zéolitique au tamis moléculaire de type SAPO.

6. Procédé suivant la revendication 5, dans lequel le rapport pondéral de l'aluminosilicate zéolitique au SAPO est compris dans l'intervalle de 1:2 à 50:1.

7. Procédé suivant la revendication 6, dans lequel le rapport pondéral de l'aluminosilicate zéolitique au SAPO est compris dans l'intervalle de 1:1 à 20:1.

8. Procédé suivant la revendication 1 ou 2, dans lequel le catalyseur comprend un constituant sous forme d'une matrice d'oxyde inorganique, présent en une quantité comprise dans l'intervalle de 0 à 99 pour cent en poids, sur la base du poids total dudit catalyseur.

9. Procédé suivant la revendication 8, dans lequel le constituant sous forme de matrice d'oxyde inorganique est présent en une quantité comprise dans l'intervalle de 5 à 95 pour cent en poids.

10. Procédé suivant la revendication 1 ou la revendication 2, dans lequel le SAPO possède au moins une partie de ses cations sous forme d'une espèce engendrant de l'hydrogène.

11. Procédé suivant la revendication 10, dans lequel l'espèce engendrant de l'hydrogène est $NH_4^+$ ou $H^+$.

12. Procédé suivant la revendication 1, dans lequel le procédé est mis en oeuvre par mise en contact d'une charge hydrocarbonée bouillant entre 204,4°C et 648,9°C avec le catalyseur à une température comprise dans l'intervalle de 260°C à 648,9°C sous une pression allant d'une pression inférieure à la pression atmosphérique à 665 mbars et à une VSHL comprise dans l'intervalle de 0,2 à 50.

13. Procédé suivant la revendication 2, dans lequel la mise en oeuvre est effectuée par contact d'une charge hydrocarbonée bouillant dans l'intervalle de 204,4°C à 648,9°C, en présence d'hydrogène avec le catalyseur à une température comprise dans l'intervalle de 204,4°C à 482,2°C, sous une pression comprise dans l'intervalle de 1,702 bar à 173,3 bars et à un rapport molaire de l'hydrogène à la charge hydrocarbonée compris dans l'intervalle d'environ 1 à environ 100.

14. Procédé suivant la revendication 4, dans lequel l'aluminosilicate zéolitique est la ZSM-5.

15. Procédé suivant la revendication 9, dans lequel le constituant sous forme de matrice d'oxyde inorganique est choisi dans le groupe comprenant des argiles, des silices, des alumines, des mélanges silice-alumine, silice-zircone, silice-magnésie, alumine-oxyde de bore, alumine-oxyde de titane et leurs mélanges.

16. Procédé suivant la revendication 1 ou la revendication 2, dans lequel le SAPO est choisi dans le

groupe comprenant le SAPO-5, le SAPO-11, le SAPO-31, le SAPO-37, le SAPO-40, le SAPO-41 et leurs mélanges.

17. Procédé suivant la revendication 1 ou la revendication 2, dans lequel la charge hydrocarbonée est choisie dans le groupe comprenant le combustible de chauffage, le carboréacteur, des huiles lubrifiantes, des gas-oils distillés, le naphta, le réformat, le kérosène, le carburant Diesel, des gas-oils obtenus par distillation sous vide poussé, des produits de réaction de Fischer Tropsch, le VGO, des résidus atmosphériques, des résidus de distillation sous vide, des bruts synthétiques, le charbon pulvérisé et leurs mélanges.

18. Procédé suivant la revendication 4, dans lequel l'aluminosilicate zéolitique est choisi dans le groupe comprenant la zéolite Y, des zéolites de type Y ultrastables, la zéolite X, la zéolite bêta, la silicalite, la zéolite KZ-20, la faujasite, la zéolite LZ-210, la zéolite LZ-10, des zéolites de type ZSM et leurs mélanges.

19. Procédé suivant la revendication 2, dans lequel le catalyseur d'hydrogénation est au moins un métal choisi dans le groupe comprenant Pt, Pd, Rh, Ru, Ni, W, Mo, Co, Ti, Cr et leurs mélanges.

20. Procédé suivant la revendication 19, dans lequel le métal est choisi dans le groupe comprenant Pt, Pd, Rh, Ru et leurs mélanges et est présent en une quantité efficace comprise dans l'intervalle de 0,05 pour cent en poids et 1,5 pour cent en poids.

21. Procédé suivant la revendication 19, dans lequel le métal est choisi dans le groupe comprenant Ni, W, Mo, Co, Ti, Cr et leurs mélanges et est présent en une quantité comprise dans l'intervalle de 1,0 à 30% en poids.

22. Catalyseur comprenant un aluminosilicate et au moins un SAPO suivant la définition de la revendication 1, caractérisé sous sa forme calcinée par une adsorption d'isobutane au moins égale à 2 pour cent en poids sous une pression de 665 mbars et à une température de 20°C, dans lequel le rapport pondéral de l'aluminosilicate au SAPO est compris dans l'intervalle de 1:10 à 500:1, et au moins un métal choisi dans le groupe comprenant le nickel, le cobalt, le tungstène, le molybdène, le platine, le palladium, le chrome, le rhodium, le ruthénium et le titane.

23. Catalyseur suivant la revendication 22, dans lequel le tamis moléculaire de type SAPO est caractérisé en outre sous sa forme calcinée par une adsorption de triéthylamine de zéro à moins de 5 pour cent en poids sous une pression de 3,46 mbars et à une température de 22°C.

24. Catalyseur suivant la revendication 22 ou la revendication 23, dans lequel le catalyseur contient au moins un aluminosilicate zéolitique choisi dans le groupe comprenant la zéolite Y, la zéolite Y ultrastable, la zéolite X, la silicalite, la zéolite bêta, la zéolite KZ-20, la faujasite, la zéolite LZ-210, la zéolite LZ-10, des zéolites de type ZSM et leurs mélanges.

25. Catalyseur suivant la revendication 24, dans lequel le catalyseur contient 1 à 99 pour cent en poids d'au moins un constituant sous forme de matrice d'oxyde inorganique.

26. Catalyseur suivant la revendication 25, dans lequel le constituant sous forme de matrice d'oxyde inorganique est choisi dans le groupe comprenant des argiles, des silices, des aluminés, des mélanges silice-alumine, silice-zircone, silice-magnésie, alumine-oxyde de bore, alumine-oxyde de titane et leurs mélanges.

27. Catalyseur suivant la revendication 22 ou la revendication 23, dans lequel le SAPO est choisi dans le groupe comprenant le SAPO-5, le SAPO-11, le SAPO-31, le SAPO-37, le SAPO-40, le SAPO-41 et leurs mélanges.

28. Catalyseur suivant la revendication 27, dans lequel l'aluminosilicate zéolitique est choisi dans le groupe comprenant la zéolite Y, une zéolite de type Y ultrastable, la zéolite LZ-210, la zéolite LZ-10, la silicalite et la zéolite ZSM-5 et leurs mélanges.

FIG. 1

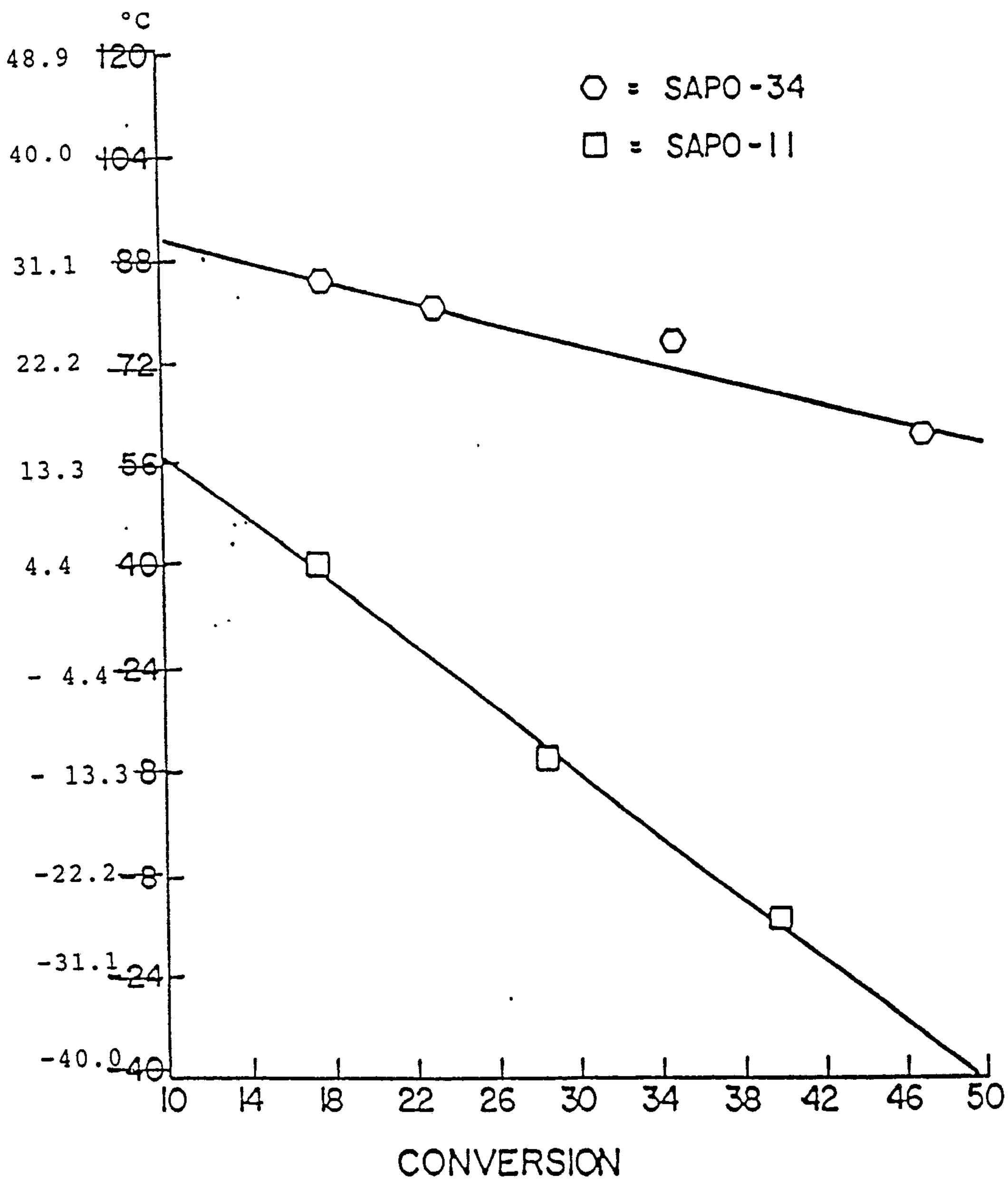
°C
48.9
40.0
31.1
22.2
13.3
4.4
- 4.4
- 13.3
-22.2
-31.1
-40.0
120
104
88
72
56
40
24
8
-8
-24
-40
○ = SAPO-34
□ = SAPO-11
10
14
18
22
26
30
34
38
42
46
50
CONVERSION

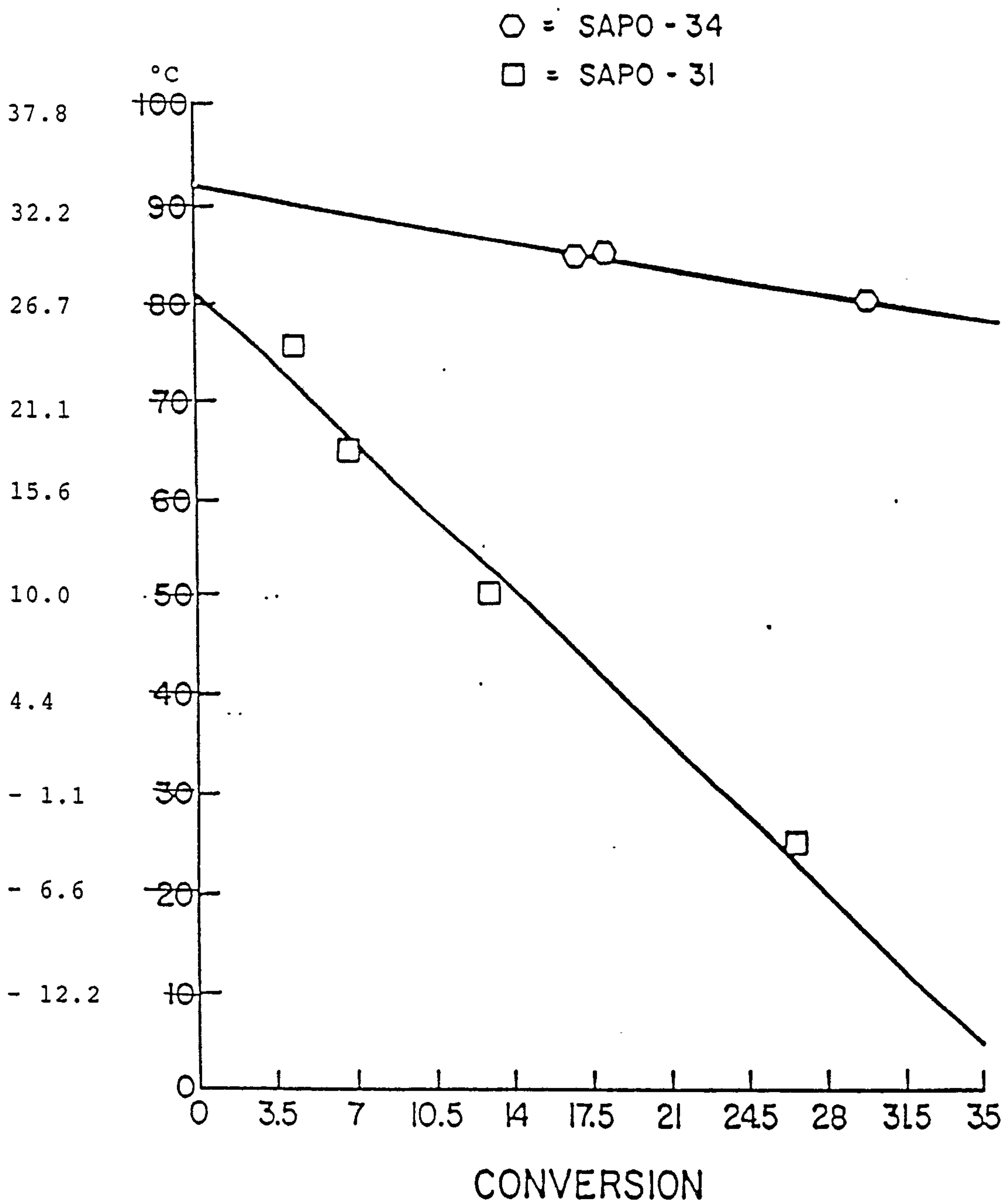
○ = SAPO - 34
□ = SAPO - 31
°C
37.8
32.2
26.7
21.1
15.6
10.0
4.4
- 1.1
- 6.6
- 12.2
100
90
80
70
60
50
40
30
20
10
0
0
3.5
7
10.5
14
17.5
21
24.5
28
31.5
35
CONVERSION

FIG. 2